# EUROPEAN PATENT APPLICATION

(11) **EP 1 383 306 A2**
(43) Date of publication of application: **21.01.2004**
(21) Application number: 03254467.8
(22) Date of filing: 16.07.2003
(51) Int. Cl.: H04N 1/409

(54) **Reducing artifacts in printing**

(30) Priority: 19.07.2002 US 198864
(71) Applicant: Hewlett-Packard Development Company, L.P., Houston, TX 77070 (US)
(72) Inventor: Bauer, Stephen W., San Diego, CA 92107 (US)
(74) Representative: Jackson, Richard Eric

(57) **Abstract**

A method of reducing artifacts in printing a scanned image 24 includes scanning an image 20 using a scanner 102 having a characteristic defect 22 to produce a scanned image 24 having a first characteristic defect direction 26. In addition, the method includes printing the scanned image 24 using a printer 106 having a second characteristic defect direction 34 generally orthogonal to the first characteristic defect direction 26.

## Description

### BACKGROUND

Scanners, such as optical scanners, create undesirable side effects or artifacts in scanned images. When a scanned image is viewed, these artifacts resemble bands of image anomalies or defects, parallel to the longitudinal axis of a scanning bar, which is used to transport or carry the image sensors with respect to media on which an image appears, in order to scan an image on the media. The bands produced in the course of scanning an image are referred to herein as a characteristic defect of a scanner. These characteristic defects can be characterized as being "directional characteristic defects" inasmuch as the bands run in the direction of the scanning bar axis.

When a digitized image obtained from a scanner with a directional characteristic defect is subsequently printed from a printer, which also has a directional characteristic defect in the same direction as the scanner's characteristic defect, the banding artifacts from the scanner and the banding artifacts of the printer can additively combine in an output image in such a way that the output image quality is degraded.

### BRIEF DESCRIPTION OF THE DRAWINGS

Fig.1 is is a depiction of three images such as documents, photographs, or photographic negatives from which film prints can be made.

Fig.2 is a depiction of the banding artifacts generated by an optical scanner scanning the images of Fig. 1, in the direction shown in Fig. 1 and Fig. 2,.

Fig. 3 is a depiction of the output from a printer having its own characteristic defects that have a direction or orientation that aligns with the characteristic defects of the scanner that scan the images shown in Fig. 1.

Fig.4 is a depiction of an optical scan of an image using an optical scanner having a characteristic defect.

Fig. 5 depicts the re-orientation of the printing of a scanned image from a printer so that the printer's characteristic output defect is generally orthogonal to the characteristic defect direction of a scanner.

Fig. 6 depicts an image processing system, such as a digital copier or photograph processing system.

### DETAILED DESCRIPTION OF THE PREFERRED EMBODIMENT

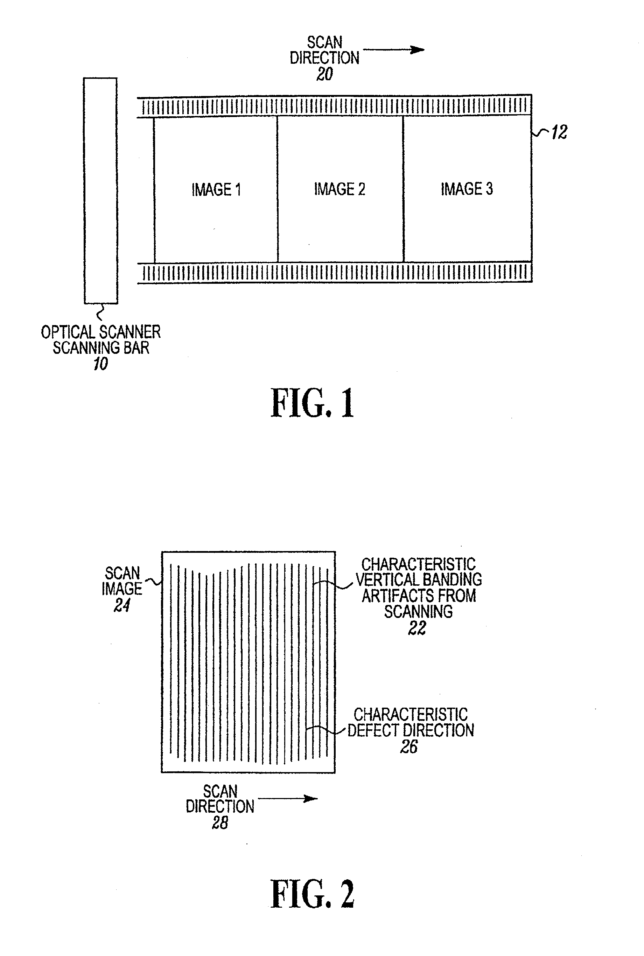

Fig. 1 depicts an optical scanner (10) embodied as a scanning bar in which sensors (not shown) are mounted so as to enable the sensors to detect or sense images on a media. The optical scanner (10) and media (12) on which images 14, 16 and 18 are printed, move with respect to each other. In some scanner implementations the scanning bar moves; in other scanner implementations, the media (12) is moved.

The scan direction (20) is shown in Fig. 1 as being from left to right. That is, image 1 is scanned ahead of image 2 and image 2 is scanned in front of image 3.

As shown in Fig. 2, scanner (10) characteristic vertical banding artifacts (22) will have a characteristic direction or orientation (26) corresponding to the direction of orientation of the scanning bar used in the optical scanner (10) that occur within scan image 24. Stated alternatively, the characteristic defect direction (26) of the vertical banding artifacts (22) is at right angles or orthogonal to the scan direction (28). When the scanned image is printed from a printer - which also has directional characteristic defects in its outputs, the characteristic defect from the scanner frequently adds to, or combines with the characteristic defects from the printer, thereby visibly degrading image output quality.

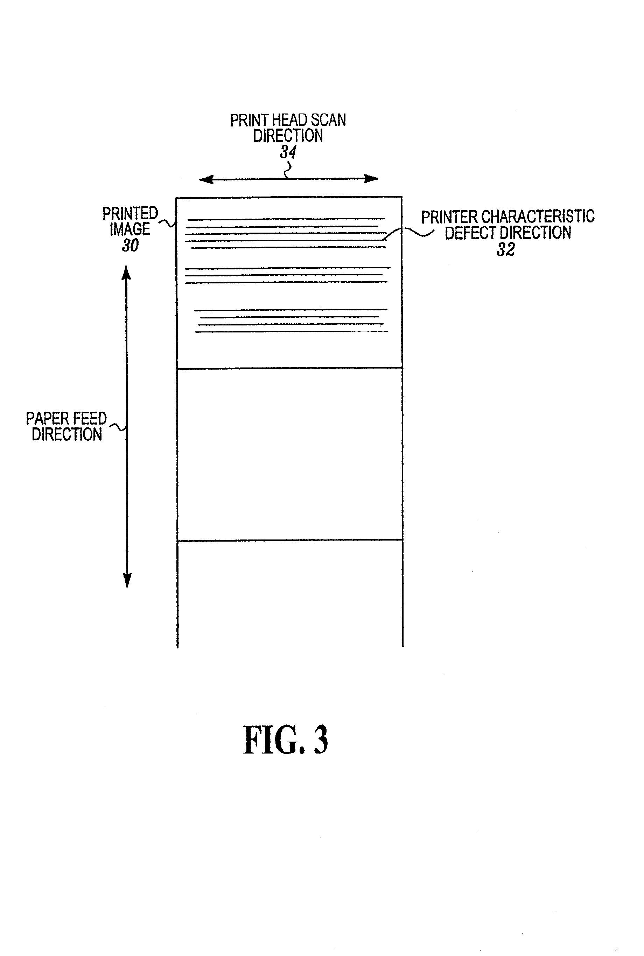

As shown on Fig. 3, an image (30) printed from almost all types of printers can have directional characteristic defects. In the case of a reciprocating ink jet print head, the direction of the printer's characteristic defect will have an orientation or direction (32) that aligns with the print head scan direction (34).

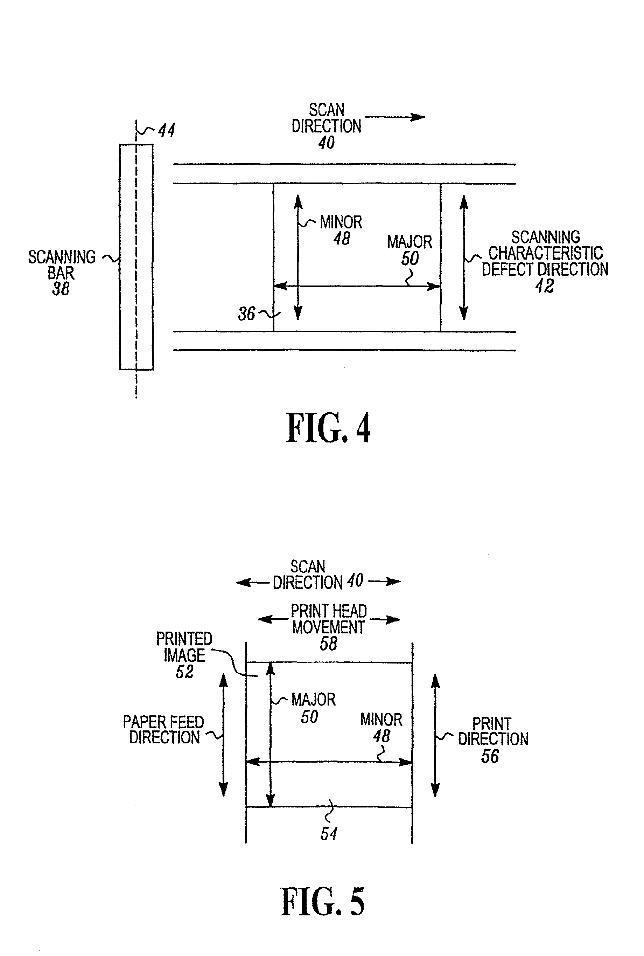

Fig.4 shows a media (36), such as a printed document, photograph or photographic negative, on which an image is to be optically scanned. An optical scanner, comprised of a scanning bar (38) that traverses the media (36) in the scan direction (40) as shown, reads or scans the surface of the media (36) detecting the presence of image under individual sensor elements that are arrayed along the length of the scanning bar (38). The process of optically scanning an image entails sampling segments or portions or picture elements (pixels) of an image on the media (36) along a line formed by numerous individual sensors in the scanning bar 38. The outputs of the sensors are digitized. The scanning bar (38) is moved along the scan direction to another point and the process of reading the image and digitizing the sensor output continues. In the process of scanning the media (36), the optical scanner will create an output data file, the contents of which represent the image scanned by the scanner.

The optical scanner scanning bar (38) and any mechanism moving the scanning bar with respect to the media (36) (or mechanism moving the media (36) with respect to the scanning bar (38)) will generate artifacts in the resultant output file from the scanner (the output file is a data file the contents of which represent digitized picture elements or pixels which represent the image on a media (36).). As the scanning bar (38) and media (36) move with respect to each other, characteristic defects, referred to herein as "banding" defects or artifacts, will be oriented in a direction (42) that aligns with the major axis (44) of the scanning bar (38). As shown in Fig. 4, the scanner characteristic defect direction (42) is parallel to the minor axis (48) and generally orthogonal to the major axis (50) of the media (36) from which an image is to be scanned and generally orthogonal to the scan direction (40).

The data file that represents a scanned image will have embedded in the data, the scanner's characteristic defects. An image data file obtained from a scanner can therefore be created and separately processed prior to printing the image. Scanner characteristic defects can be identified in an image data file by performing a fast Fourier transform so as to identify the location and/or direction of the bands that are the scanner artifacts. Characteristic defects such as bands or banding lines are usually periodic, i.e., they appear at periodic intervals. Performing a Fast Fourier Transform on the data in the data file produced by an optical scanner in the course of scanning an image can reveal the presence of any periodicity in the data file, at least suggesting that the scanned image includes repeating bands in the image. A decision can be made by a computer or other processor with access to the image data file whether to rotate the image to be printed either 0° or +/-90° so that the optical scanner's characteristic defect direction will be orthogonal to the printer's characteristic defect direction when the image is printed.

When a scanned image, with it's scanner-attributable characteristic defects, is printed on a printer, which creates its own characteristic defects, image quality can be improved and characteristic defect combinations reduced, if the characteristic defects due to the scanner and the characteristic defects due to the printer are generally orthogonal to each other.
Image degradation attributable to the scanning bands can be reduced in an output image by changing the orientation in which the scanned image is printed by a printer that also generates characteristic defects.

Fig.5 shows how to print an image (52) on a print media (54) in a direction or orientation (56) such that the printer's characteristic defect direction is generally orthogonal to the direction of the scanner's characteristic defect (also orthogonal to the minor axis (48) of the media (36) over which the scan was performed). As shown in Fig. 5, the printer's image print direction (56) is orthogonal to the scanner's scan direction (40). In other words, after an image is scanned, the digitized representation of the image is rotated ninety degrees such that when it is printed by a printer having its own characteristic defect, the characteristic defects created by the printer mechanism are at generally right angles to the characteristic defects created by the scanner. Rotating a digital representation of an image can be readily performed by using image processing programs such as Adobe Photoshop®.

If the printed image (52) is to be printed with a moveable print head, such as a reciprocating head inkjet printer, the head of which traverses the media (54) in the print head direction (58), printer characteristic defect direction will ordinarily be aligned with the image's minor axis (48), i.e., aligned with the scanner's characteristic defects. By rotating the orientation of the scanned image ninety degrees however, the printer characteristic defect direction (58) can be made to be orthogonal to the scanner characteristic defect direction (42) thereby reducing the prominence of both characteristic defects and reducing the likelihood that the characteristic defects of the scanner will add to the characteristic defects of the printer. When printing an image scanned using a scanner with a directional characteristic defect, the scanned image should be printed such that the direction of the characteristic defect of the printer is generally orthogonal to the characteristic defect direction of the scanner.

When using a reciprocating head inkjet printer, characteristic defects will generally lie in the direction of (i.e., parallel to the travel of) the reciprocating head. Similarly, when using a page-wide inkjet printing array, directional characteristic defects will generally lie parallel to the major axis of the page wide (typically inkjet) printing array. Similarly, a laser printer which prints lines at a time will also have directional characteristic defects that are parallel to the direction in which lines are formed onto the photoconductor by the laser engine.

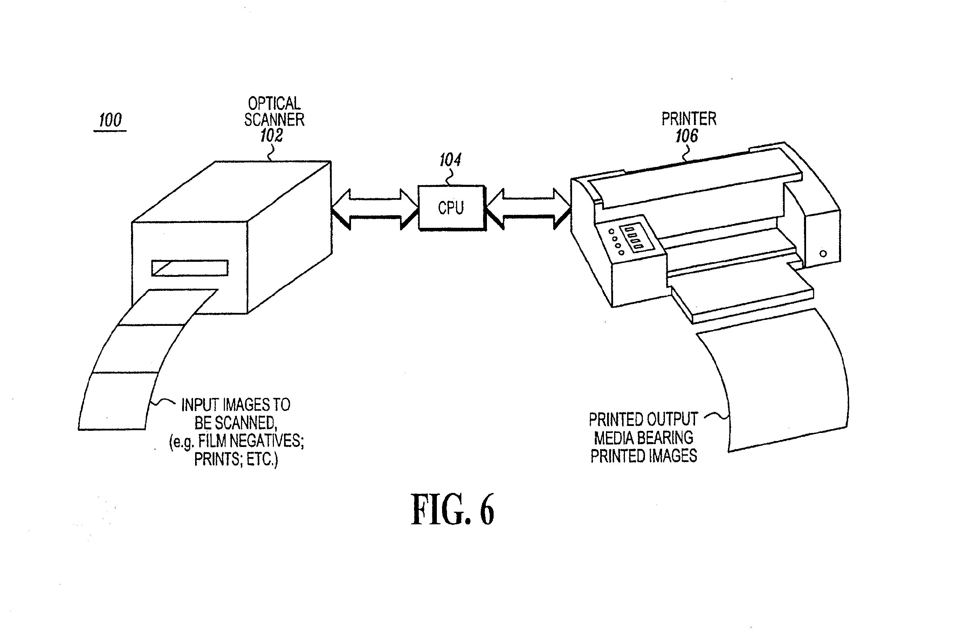

Fig. 6 depicts a representation of an image processing system (100), such as a digital copier or photograph processing system that optically scans image such as documents, photographic prints or photographic negatives; digitizes the input images and prints copies of documents or photographs. When using a printer (106) having a directional characteristic defect, the image processing system (100) reduces print output banding using the aforementioned method.

The image processing system (100) incorporates an optical scanner (102), which is coupled to a central processor unit or computer (104). The optical scanner (102) scans or reads images on the media and generates (i.e., outputs) data representing the image to a computer (104) The computer (104), which is coupled to both the scanner (102) and a printer (106), processes the data from the scanner (102) into one or more data files, the contents of which represent the image scanned from the input media.

For the reasons set forth above, the optical scanner (102) will frequently produce bands or other repeating defects that are created in the process of scanning an image. The bands are usually repetitive and directionally oriented to be orthogonal to the scan direction. As such, the scanner (102) can be said to have a first characteristic defect direction, orthogonal to the scan direction and therefore parallel to the scanning bar longitudinal axis.

The printer (106) will also typically have a characteristic defect direction attributable to its printing mechanism. Printing mechanisms used in the printer (106) are typically comprised of reciprocating-head inkjet print heads, a page-wide inkjet print head array or a laser printer employing one or more lasers and a rotation drum or drums by which toner is deposited onto print media.

The computer (104) can be equipped with (i.e., have a configuration for) image processing software by which characteristics of the scanned image can be adjusted. Image processing software exists that can adjust various image characteristics. Programs such as Adobe Photoshop® are able to edit or adjust image characteristics such as, but not limited to, color content and intensity (either red/green/blue or cyan/yellow/magenta/black) color balance, intensity, and the like. In addition to adjusting image characteristics, the computer (104) can rotate a scan image for printing in order to reduce or eliminate printing banding artifacts described above.

Because the scanner (102) and the printer (106) will each have directional characteristic defects attributable to their mechanical components or mechanisms, it is desirable to reduce or eliminate their addition in an output image. The processor or computer (104), being appropriately programmed with computer program instructions, therefore rotates images scanned from the scanner such that the characteristic defects of the scanner, which will be embodied in the data file generated by the scanner (102) and sent to the processor (104), are printed from the printer (106) with the orientation of the scanned image being rotated when it is sent to the printer (106).

Whether the printer (106) is a reciprocating head inkjet printer, a page-wide inkjet printing array or a laser printer, the scanner artifacts will be less visible in the printed output if the scanned image is rotated and sent to the printer (106) in a direction generally orthogonal to that at which it was scanned.

In a preferred embodiment, the processor was implemented using a microprocessor. Alternate and equivalent embodiments would be a digital signal processor, an application-specific integrated circuit or a field-programmable gate array so long as the functionality of the processor (104) rotates the scanned images from the optical scanner (102) and sends them to the printer (106) such that the images are printed with the directional defect direction generally orthogonal to the printer's defect direction.

While the preferred embodiment of the invention contemplates use with a photo processing lab, the invention finds equal application to any document processing system which scans documents optically, stores the digital representations thereof, and prints those digitized images using a printer which has its own characteristic direction.

## Claims

1. A method of reducing print output banding in printing an optically scanned and digitized image on a printer 106 comprising:
receiving a data file, the contents of which represent a scanned image 24 having a directionally-oriented characteristic scanning defect 22 attributable to a scanning process, wherein the directionally-oriented characteristic scanning defect is oriented in a first direction 26;
processing 100 the data file to rotate the scanned image 24 to be printed from a printer 106 having a directionally-oriented characteristic printing defect 32 substantially orthogonal to the first direction 26.

2. The method of claim 1, further including scanning an image 20 to produce the data file.

3. The method of claim 2, wherein scanning includes scanning the image 20 using a scanner 102 having a characteristic scanning defect 22 oriented in the first direction 26 and printing the image using a printer 106 having a characteristic printing defect 32 oriented in a second direction 34.

4. The method of claim 2, wherein scanning includes scanning an image 20 with a scanner 102 having a characteristic scanning defect 22 oriented in a first direction 26, produced by an artifact of a scanner mechanism included in the scanner 102.

5. The method of claim 3, wherein printing the scanned image 52 includes printing the scanned image 52 with the printer 106, the printer 106 having the characteristic printing defect 32 oriented in the second direction 34 from an artifact of a printer mechanism included in the printer 106.

6. The method of claim 3, wherein printing the scanned image 52 includes printing using at least one of: a reciprocating-head ink jet printer; a page-wide ink jet printing array; a laser printer.

7. The method of claim 1, wherein the scanned image 24 has a major axis 50 and a minor axis 48, wherein the first direction 26 and 42 is orthogonal to the major axis 50.

8. The method of claim 1, wherein processing 100 includes using at least one of: a microprocessor; a digital signal processor; an application specific integrated circuit; a field-programmable gate array.

9. The method of claim 1, wherein processing 100 includes adjusting characteristics of images 20 scanned by the scanner 102.

10. The method of claim 1, wherein the method further determining whether the scanner 102 creates a characteristic scanning defect, wherein determining includes:
performing a Fast Fourier Transform on the data file to identify a presence of periodicity in the data file; and
choosing an image rotation angle (00 or +/- 90°) such that the characteristic scanning defect 22, oriented in a first direction 26, will be substantially orthogonal to the characteristic printing defect 32, oriented in the second direction 34, when the image is printed.
